(19) **Europäisches Patentamt / European Patent Office / Office européen des brevets**

(11) **EP 1 783 965 B1**

(12) **EUROPEAN PATENT SPECIFICATION**

(45) Date of publication and mention
of the grant of the patent:
**20.02.2013 Bulletin 2013/08**

(51) Int Cl.:
*H04W 88/16* (2009.01)     *H04W 84/18* (2009.01)

(21) Application number: **06022725.3**

(22) Date of filing: **31.10.2006**

(54) **Centralized control for configuring a wireless mesh network**

Zentralisierte Steuerung zur Konfiguration eines drahtlosen Maschennetzwerkes

Contrôle centralisé pour la configuration d'un réseau mallié sans fil

(84) Designated Contracting States:
**DE GB**

(30) Priority: **02.11.2005 JP 2005318972**

(43) Date of publication of application:
**09.05.2007 Bulletin 2007/19**

(73) Proprietor: **NEC Corporation**
**Minato-ku**
**Tokyo 108-8001 (JP)**

(72) Inventor: **Kato, Hidenori**
**Tokyo (JP)**

(74) Representative: **Glawe, Delfs, Moll**
**Patent- und Rechtsanwälte**
**Postfach 26 01 62**
**80058 München (DE)**

(56) References cited:
**WO-A-2004/014025     WO-A-2005/062552**

- **SHOUYI YIN ET AL: "Adaptive load balancing in mobile ad hoc networks" WIRELESS COMMUNICATIONS AND NETWORKING CONFERENCE, 2005 IEEE NEW ORLEANS, LA, USA 13-17 MARCH 2005, PISCATAWAY, NJ, USA, IEEE, vol. 4, 13 March 2005 (2005-03-13), pages 1982-1987, XP010791485 ISBN: 978-0-7803-8966-3**

## Description

BACKGROUND OF THE INVENTION

Field of the Invention

The present invention relates to a wireless line control system, a centralized control apparatus, a wireless line control method used therein and a program therefor. In particular, the present invention relates to controlling wireless lines in a wireless mesh network.

Description of the Prior Art

Conventionally, as a wireless mesh network, a network has been proposed which distributively arranges wireless terminals at certain intervals in a mesh pattern to configure a wireless mesh, and transfers packet data between mutually adjacent wireless terminals to relay the packet data to a destination terminal (for instance, refer to Japanese Patent, JP 2000 115171).

In this wireless mesh network, congestion processing is performed by wireless terminals by changing transmission speed according to the volume of data in the network or changing transfer rates according to destination of transmission. Additionally, the wireless mesh network is equipped with functions such as attaching directional characteristics to data upon transmission, performing data transmission using two or more channels provided in anticipation of collision of the data on radio waves, or providing each wireless terminal with a function to select a nearest connection point from a plurality thereof.

In a conventional wireless mesh network such as described above, controlling its wireless lines through centralized control is considered unrealistic from the viewpoints of increased load on a control station or following capability to traffic volume which fluctuates instantaneously and the like (for instance, refer to Japanese Patent JP2002345016).

BRIEF SUMMARY OF THE INVENTION

In the conventional wireless mesh network described above, since destinations of relay radio between wireless nodes which configure the wireless mesh network are changed for load distribution in a state where the loads on the wireless nodes are high, loads due to control signals for switching relay radio in relation to wireless nodes with high loads are increased.

Additionally, in the conventional wireless mesh network, since switching of relay radio is performed within the network in a high-load state during which many user terminals are connected, instantaneous interruption or disconnection occurs at many of the connected user terminals.

Furthermore, in the conventional wireless mesh network, since switching of destinations is performed by searching wireless nodes to be alternative destinations after radio wave conditions of relay radio between wireless nodes have deteriorated, instantaneous interruption or a long period of disconnection occur at the connected user terminals in cases where no destinations could be found or where traffic at destinations are high.

WO 2004/014025 A1 discloses a centralized control apparatus according to the preamble of claim 1.

WO 2005/062552 A1 describes a multiple hop wireless communication network wherein mobile terminals can communicate with each other directly.

SHOUYI YIN ET AL: "Adaptive load balancing in mobile ad hoc networks" WIRELESS COMMUNICATIONS AND NETWORKING CONFERENCE, 2005 IEEE NEW ORLEANS, LA, USA 13-17 MARCH 2005, PISCATAWAY, NJ, USA, IEEE, vol. 4, 13 March 2005 (2005-03-13), pages 1982-1987 discloses a load balancing rooting technique for mobile ad hoc networks.

In consideration of the above, an object of the present invention is to solve the above problems by providing a wireless line control system, centralized control apparatus, wireless line control method used therein and program therefor which are capable of reducing control signals to wireless nodes with high loads as well as reducing occurrences of instantaneous interruption or disconnection at user terminals connected to the wireless nodes. This object is achieved by a centralized control apparatus according to claim 1, a wireless line control system according to claim 6, a wireless line control method according to claim 7 and a program according to claim 12, respectively; the dependent claims are related to further developments of the invention.

The wireless line control system according to the present invention enables reduction of control over wireless nodes with high loads as well as reduction of occurrences of instantaneous interruption or disconnection at user terminals connected to the wireless nodes by having means of establishing an appropriate wireless network before the wireless nodes enter high-load states or before radio wave conditions of relay radio between the wireless nodes deteriorate by analyzing traffic information collected in advance or by analyzing radio wave propagation states.

A first characteristic of the present invention is that, when establishing a network with wireless nodes for establishing a wireless mesh network, the centralized control node collects traffic information in advance from each wireless node, and a traffic pattern from the present to the future is estimated by analyzing such historical traffic information to achieve establishment of a mesh network of the wireless nodes before traffic load rises so that the configured network distributes load over the entire mesh network to enable optimum throughput.

The above-described wireless nodes correspond to access points in a wireless LAN (local area network) or base stations in a mobile communication system, and the same definition of wireless nodes will be used in the description below.

A second characteristic of the present invention is that, when establishing a network with wireless nodes for establishing a wireless mesh network, the centralized control node collects in advance radio wave reception levels between wireless nodes from each wireless node, and radio wave propagation states from the present to the future is estimated by analyzing such historical radio wave reception levels to achieve establishment of a mesh network of the wireless nodes so that throughput attenuation due to radio waves in the configured network becomes minimal.

A third characteristic of the present invention is that, when establishing a network with wireless nodes for establishing a wireless mesh network, accurate estimation of traffic patterns or radio wave propagation states is made possible by having the centralized control node repeatedly acquire traffic information or information regarding radio wave reception levels from each wireless node.

In wireless mesh networks, there are wireless lines which relay data between wireless nodes, and wireless lines which transmit and receive data between wireless nodes and user terminals. In the following description, the former will be defined as relay radio while the latter will be defined as access radio.

To be more precise, in the wireless line control system according to the present invention, the centralized control node acquires in advance reception levels between individual wireless nodes from each wireless node so that two wireless nodes that are connectable are verified. The centralized control node then periodically acquires traffic information from each wireless node, and calculates and stores average values of the acquired traffic information. Relay radio loads, number of relay radio lines, access radio loads, number of access radio lines and the like may be considered as traffic information.

In relation to a load pattern (trend based on time slots such as weekdays and holidays) from the present to the future which is estimated from the average values of stored historical traffic information, the centralized control node distributes the load on the entire network and determines a configuration of the wireless mesh network so that optimum throughput is obtained, and issues instructions for mesh configuration including information necessary for establishing the mesh network to each wireless node. Messages for realizing the instructions on mesh configuration include wireless nodes which are destinations of relay radio, allowable relay radio load, allowable access radio load and the like.

As seen, in the wireless line control system according to the present invention, since traffic information of each wireless node and reception levels between wireless nodes are acquired in advance by the centralized control node, and a wireless mesh network is established based on estimated future traffic patterns or information on radio wave propagation states, an appropriate wireless mesh network may be established before traffic loads rise.

This means that, in the wireless line control system according to the present invention, by analyzing historical traffic information or historical radio propagation states collected in advance by the centralized control node, an appropriate wireless mesh network may be established before the wireless nodes enter high-load states or before radio wave conditions of relay radio between the wireless nodes deteriorate, thereby enabling reduction of control signals to wireless nodes with high loads as well as reduction of occurrences of instantaneous interruption or disconnection at user terminals connected to the wireless nodes.

As seen, in the wireless line control system according to the present invention, since average values of traffic information collected in advance are calculated per specific days of the week or time slots so that a wireless mesh network which realizes optimum throughput is configured before loads on wireless nodes rise according to traffic states estimated in advance, it is possible to reduce control, which accompany changing configurations of the network, over wireless nodes with high loads.

Additionally, in the wireless line control system according to the present invention, since average values of traffic information collected in advance are calculated per specific days of the week or time slots so that a wireless mesh network which realizes optimum throughput is configured before loads on wireless nodes rise according to traffic states estimated in advance, it is possible to reduce occurrences of instantaneous interruption or disconnection which accompany changes in network configuration at many of the user terminals connected to wireless nodes.

Furthermore, in the wireless line control system according to the present invention, since average values of radio propagation states collected in advance are calculated per specific days of the week or time slots so that a wireless mesh network which uses usable relay radio is configured before radio wave states of relay radio between wireless nodes estimated in advance deteriorate, it is possible to reduce occurrences of instantaneous interruption or disconnection at user terminals as compared to a case where alternate destinations are searched and switching is performed after radio wave states of relay radio deteriorate. While this effect is weak when using a licensed frequency band as relay radio since there is less influence due to interference from others, the effect increases when using a frequency band which may be used without a license as relay radio since there is greater influence due to interference from others.

By arranging the present invention to have the following configuration and to perform the following operations, the effects of reduction of control signals to wireless nodes with high loads as well as reduction of occurrences of instantaneous interruption or disconnection at user terminals connected to the wireless nodes may be achieved.

BRIEF DESCRIPTION OF THE DRAWINGS

FIG. 1 is a block diagram showing a configuration of a wireless line control system according to an embodiment of the present invention;

FIG. 2 is a block diagram showing a configuration of a centralized control node shown in FIG. 1 ;

FIG. 3 is a sequence chart showing operations of the wireless line control system according to an embodiment of the present invention;

FIG. 4 is a flowchart showing processing operations for calculating an average value of traffic information using the centralized control node shown in FIG. 1;

FIG. 5 is a diagram showing an example of acquisition of traffic information notified in the processing of a5 shown in FIG. 3;

FIG. 6 is a diagram showing an example of organizing average values of traffic information of wireless node (a) 3-1, calculated in the processing of a6 shown in FIG. 3, according to respective time slots;

FIG. 7 is a diagram showing an example of a configuration of a wireless mesh network which achieves optimum throughput over its entirety when average values shown in FIG. 5 are calculated from historical traffic information;

FIG. 8 is a block diagram showing a configuration of a wireless line control system according to another embodiment of the present invention; and

FIG. 9 is a sequence chart showing operations of the wireless line control system according to the other embodiment of the present invention.

DETAILED DESCRIPTION OF THE PREFERRED EMBODIMENTS

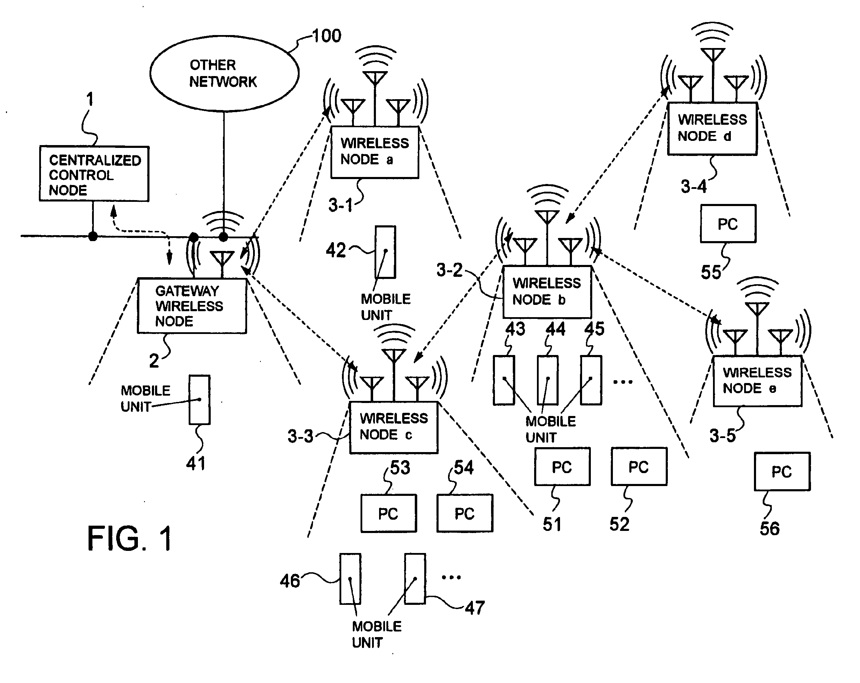

Embodiments of the present invention will now be described with reference to the drawings. FIG. 1 is a block diagram showing a configuration of a wireless line control system according to an embodiment of the present invention. In FIG. 1, the wireless line control system according to an embodiment of the present invention is comprised of a centralized control node 1, a gateway wireless node 2, wireless nodes (a to e) 3-1 to 3-5, and user terminals A such as mobile units 41 to 47 and PCs (personal computers) 51 to 56.

The centralized control node 1 is equipped with a function for collecting reception levels which indicate radio wave propagation states between the wireless nodes and information indicating traffic states at the wireless nodes fromeach wireless node (a to e) 3-1 to 3-5, a function for analyzing and storing the collected information, a function for determining a configuration of a wireless mesh network that is appropriate for future load patterns based on the analyzed historical radio wave propagation states or traffic information, and a function for instructing each wireless node (a to e) 3-1 to 3-5 to establish the determined network configuration through notification of information for configuring the wireless mesh network.

In wireless mesh networks, there are wireless lines which relay data between wireless nodes, and wireless lines which transmit and receive data between wireless nodes and user terminals. In the following description, the former will be defined as relay radio while the latter will be defined as access radio. In addition, relay radio loads, number of relay radio lines, access radio loads, number of access radio lines and the like may be considered as traffic information described above. Furthermore, wireless nodes which are destinations of relay radio, allowable relay radio load, allowable access radio load and the like may be considered as information for configuring the wireless mesh network.

The gate way wireless node 2 is equipped with a function to measure reception levels of radio waves transmitted from other wireless nodes (a to e) 3-1 to 3-5 and notify the measured reception levels to the centralized control node 1, a function to measure relay radio loads and the number of relay radios and notify the same to the centralized control node 1 when relay radios are established with the other wireless nodes (a to e) 3-1 to 3-5, a function to measure access radio loads and the number of access radios and notify the same to the centralized control node 1 when a user terminal A (for instance, mobile unit 41) exists which is performing communication within its own service area, and a function to configure a wireless mesh network according to information provided by the centralized control node 1, in response to requests from the centralized control node 1.

In addition, the gateway wireless node 2 is wire-connected to a LAN (local area network) environment, and is equipped with a function to transmit to and receive from another network 100 user data that is transmitted to and received from other wireless nodes (a to e) 3-1 to 3-5. Wireless nodes which are destinations of relay radio, allowable relay radio load, allowable access radio load and the like may be considered as information provided by the centralized control node 1.

The wireless nodes (a to e) 3-1 to 3-5 correspond to access points in a wireless LAN, or base stations in a mobile communication system. In addition, the wireless nodes (a to e) 3-1 to 3-5 are equipped with functions to measure reception levels of radio waves transmitted from other wireless nodes and notify the measured reception levels to the centralized control node 1 in response to requests from the centralized control node 1, functions to measure relay radio loads and the number of relay radios and notify the same to the centralized control node 1 when relay radios are established between the other wireless nodes, functions to measure access radio loads and the number of access radios and notify the same to the centralized control node 1 when a user terminal (for instance, mobile units 42 to 47 or PCs 51 to 56) exists which is performing communication within its own service area, and functions to configure a wireless mesh network according to information provided by the centralized control node 1.

Wireless nodes which are destinations of relay radio, allowable relay radio load, allowable access radio load and the like may be considered as information provided by the centralized control node 1.

The user terminal A, such as mobile units 41 to 47 or PCs 51 to 56, is equipped with a transmitting/receiving function for transmitting and receiving continuous data such as audio or packet data such as Web browsing between the wireless nodes. However, since such user terminals are well known in the art and are not directly related to the present invention, a description on a detailed configuration thereof will be omitted. In addition, since the other network 100 is similarly not directly related to the present invention, a detailed description on a configuration thereof will be omitted. Incidentally, the configuration of the present embodiment may include more wireless nodes, or include a plurality of gateway wireless nodes.

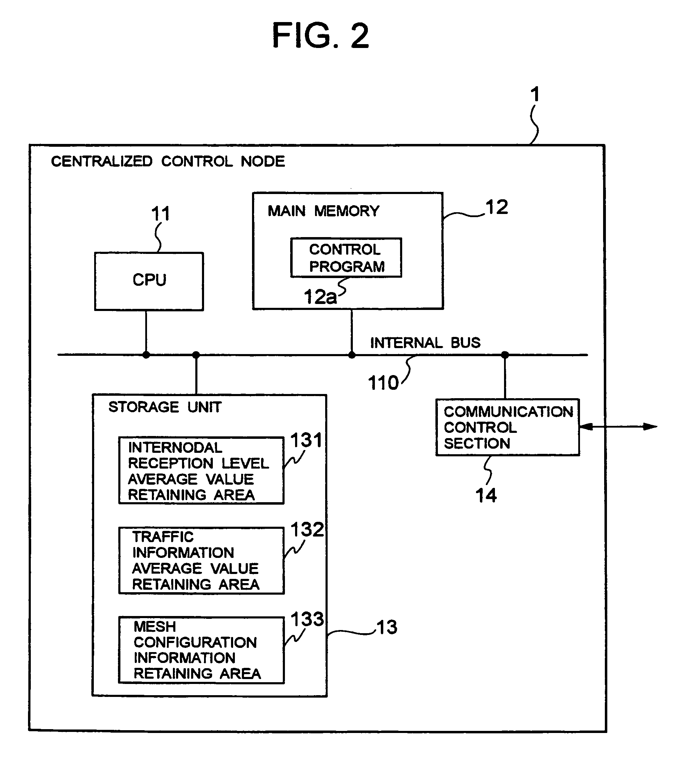

FIG. 2 is a block diagram showing a configuration of the centralized control node 1 shown in FIG. 1. In FIG. 2, the centralized control node 1 is comprised of a CPU (central processing unit) 11 which controls the various sections within the node, a main memory 12 which stores a control program 12a executed by the CPU 11, a storage unit 13 which the CPU 11 uses as a work area when executing the control program 12a, and a communication control section 14 which controls communication with the gateway wireless node 2 or another network 100 and the like. In addition, in the centralized control node 1, the CPU 11, the main memory 12, the storage unit 13 and the communication control section 14 are respectively connected to an internal bus 110.

Furthermore, the storage 13 comprises an internodal reception level average value retaining area 131 which retains calculated average levels of internodal reception levels, a traffic information average value retaining area 132 which retains calculated average levels of traffic information, and a mesh configuration information retaining area 133 which retains mesh configuration information. Incidentally, at the centralized control node 1, the above-described functions are realized through execution of the control program 12a by the CPU 11.

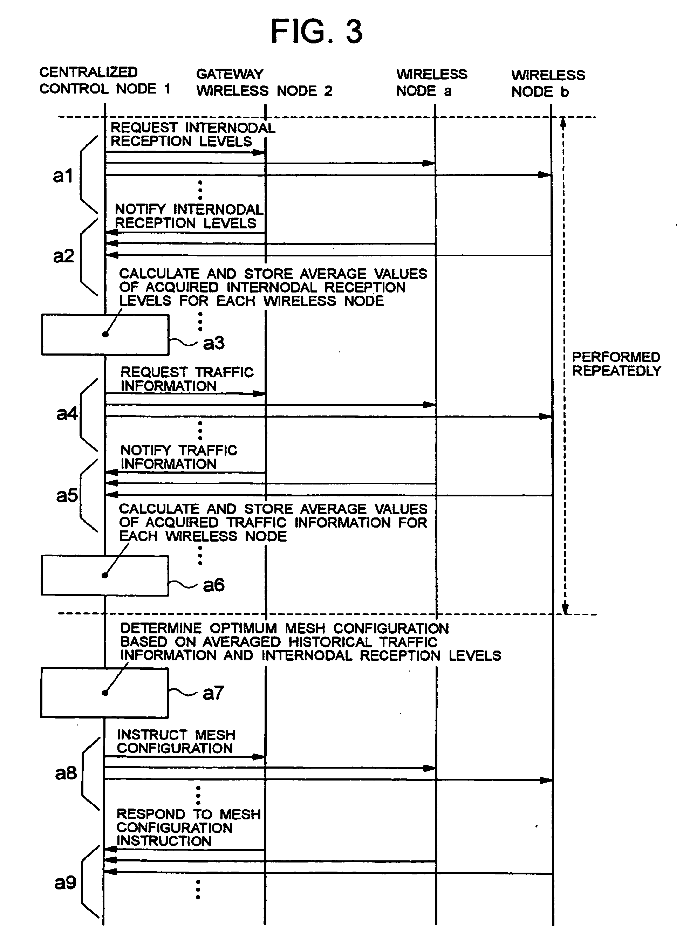

FIG. 3 is a sequence chart showing operations of the wireless line control system according to an embodiment of the present invention. Operations of the wireless line control system according to an embodiment of the present invention will now be described with reference to FIGS. 1 to 3. Incidentally, the operations of the centralized control node 1 shown in FIG. 3 are realized through execution of the control program 12a by the CPU 11.

When the centralized control node 1 requests each wireless node (a to e) 3-1 to 3-5 for reception levels indicating radio wave propagation states between the wireless nodes (refer to a1 in FIG. 3), each wireless node (a to e) 3-1 to 3-5 measures reception levels of relay radio transmitted from the other wireless nodes, and notifies the same to the centralized control node 1 (refer to a2 in FIG. 3). Depiction of the operations of the wireless nodes (c to e) 3-3 to 3-5 are omitted.

The centralized control node 1 calculates average values of the reception levels obtained from each wireless node (a to e) 3-1 to 3-5, and respectively stores the average values for each wireless node (refer to a3 in FIG. 3). This allows the centralized control node 1 to identify usable relay radio between each wireless node.

In addition, when the centralized control node 1 requests each wireless node (a to e) 3-1 to 3-5 for traffic information (refer to a4 in FIG. 3), each wireless node (a to e) 3-1 to 3-5 measures traffic information and notifies the same to the centralized control node 1 (refer to a5 in FIG. 3). While traffic information indicated at this point includes relay radio loads, number of relay radio lines, access radio loads, number of access radio lines and the like, other information indicating traffic volume may alternatively be used.

The centralized control node 1 calculates average values of the traffic information obtained from each wireless node (a to e) 3-1 to 3-5, and respectively stores the average values for each wireless node (refer to a6 in FIG. 3). The processing of a1 to a6 (calculating and storing average values of reception levels, calculating and storing average values of traffic information) is repeatedly performed.

Based on the averaged historical traffic information and reception levels between wireless nodes, the centralized control node 1 determines a configuration of a wireless mesh network which is appropriate for the present to the future (a7 in FIG. 3). In accordance with the determined wireless mesh network configuration, the centralized control node 1 transmits configuration instructions to each wireless node (a to e) 3-1 to 3-5 (refer to a8 in FIG. 3). While the information transmitted upon instructing configuration includes wireless nodes which are destinations of relay radio, allowable relay radio load, allowable access radio load and the like, the information may also include other elements for configuring the wireless mesh network.

After configuring the wireless mesh network according to configuration information instructed by the centralized control node 1, each wireless node (a to e) 3-1 to 3-5 transmits a response (refer to a9 in FIG. 3).

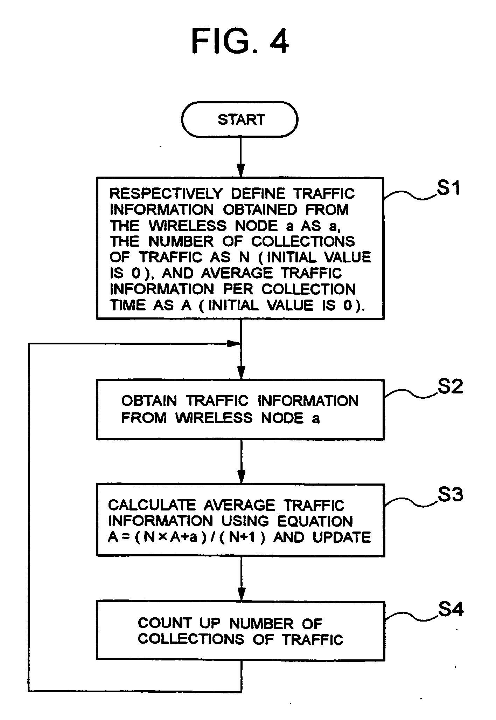

FIG. 4 is a flowchart showing processing operations for calculating average values of traffic information performed by the centralized control node 1 shown in FIG. 1. Processing operations by the centralized control node 1 for calculating average values of traffic information will now be described with reference to FIGS. 1 to 4. Incidentally, the processing shown in FIG. 4 is realized through execution of the control program 12a by the CPU 11.

In the centralized control node 1, traffic information obtained from the wireless node (a) 3-1 is defined as a, the number of collections of traffic as N (initial value is 0), and average traffic information per collection time as A (initial value is 0) (step S1 in FIG. 4). After obtaining traffic information from the wireless node (a) 3-1 (step S2 in FIG. 4), the centralized control node 1 calculates and updates average traffic information per collection time A using the following equation (step S3 in FIG. 4):

$$A = (N \times A + a) / (N + 1)$$

The centralized control node 1 next counts up (N = N + 1) the number of collections of traffic (step S4 in FIG. 4).

Next, at the centralized control node 1, average values with higher accuracy may be obtained by repeatedly performing the processing of steps S1 to S4 within the predetermined unit time. The above-described processing operations are respectively performed for each wireless node (a to e) 3-1 to 3-5, and are individually stored.

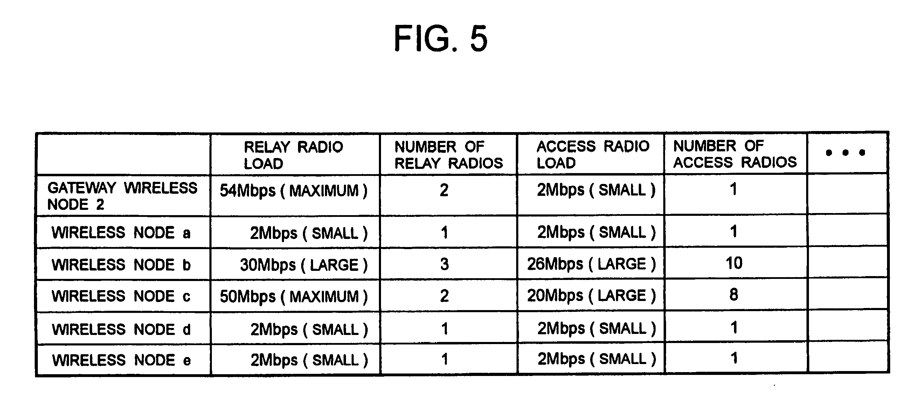

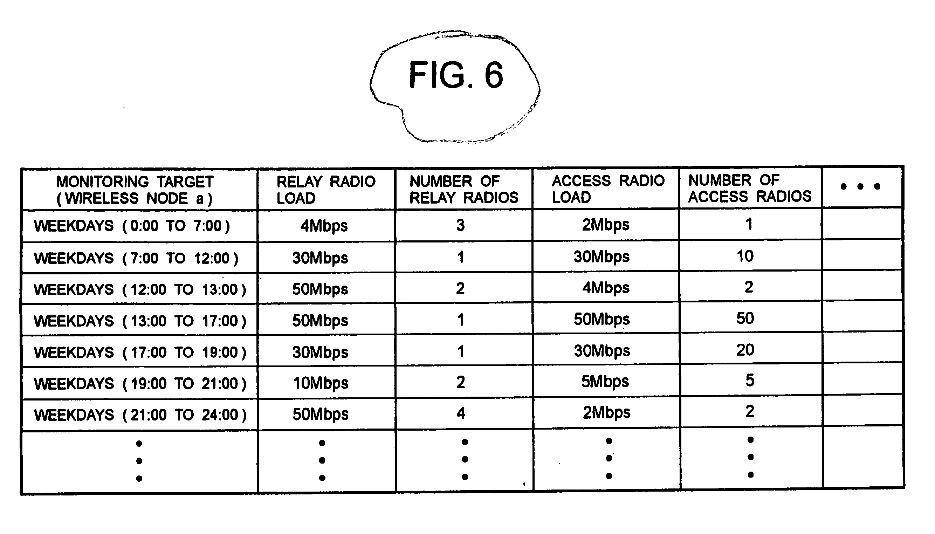

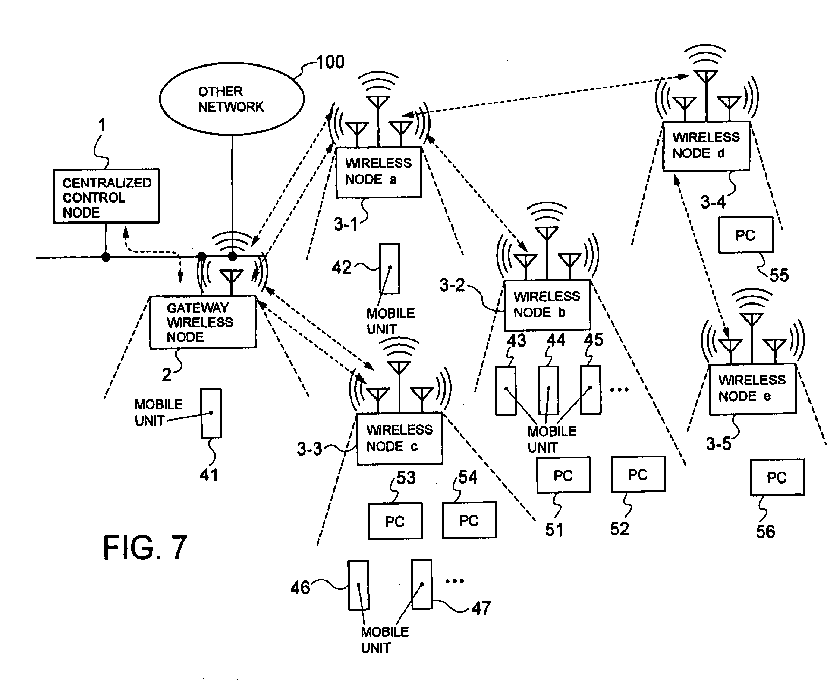

FIG. 5 is a diagram showing an example of acquisition of traffic information notified in the processing of a5 shown in FIG. 3. FIG. 6 is a diagram showing an example of average values of traffic information of wireless node (a) 3-1, calculated in the processing of a6 shown in FIG. 3, organized according to respective time slots. FIG. 7 is a diagram showing an example of a configuration of a wireless mesh network which achieves optimum throughput over its entirety when average values shown in FIG. 5 are calculated from historical traffic information.

In FIG. 5, for the gateway wireless node 2 or wireless nodes (a to e) 3-1 to 3-5, traffic information respectively includes relay radio loads, the number of relay radios, access radio loads, the number of access radios and the like. For instance, at the gateway wireless node 2, the relay radio load is "54 Mbps (maximum)", the number of relay radios is "2", the access radio load is "2 Mbps (small)", and the number of access radios is "1".

At wireless node (a) 3-1, the relay radio load is "2 Mbps (small)", the number of relay radios is "1", the access radio load is "2 Mbps (small)", and the number of access radios is "1". At wireless node (b) 3-2, the relay radio load is "30 Mbps (large)", the number of relay radios is "3", the access radio load is "26 Mbps (large)", and the number of access radios is "10".

At wireless node (c) 3-3, the relay radio load is "50 Mbps (maximum)", the number of relay radios is "2", the access radio load is "20 Mbps (large)", and the number of access radios is "8". At wireless node (d) 3-4, the relay radio load is "2 Mbps (small)", the number of relay radios is "1", the access radio load is "2 Mbps (small)", and the number of access radios is "1". At wireless node (e) 3-5, the relay radio load is "2 Mbps (small)", the number of relay radios is "1", the access radio load is "2 Mbps (small)", and the number of access radios is "1".

In FIG. 6, the average values of the traffic information of the wireless node (a) 3-1 are organized on a per-unit time basis, and for each unit time includes relay radio loads, the number of relay radios, access radio loads, the number of access radios and the like. For instance, for weekdays (0:00 to 7:00), the relay radio load is "4 Mbps", the number of relay radios is "3", the access radio load is "2 Mbps", and the number of access radios is "1".

For weekdays (7:00 to 21:00), the relay radio load is "30 Mbps", the number of relay radios is "1", the access radio load is "30 Mbps", and the number of access radios is "10". For weekdays (12:00 to 13:00), the relay radio load is "50 Mbps", the number of relay radios is "2", the access radio load is "4 Mbps", and the number of access radios is "2".

For weekdays (13:00 to 17:00), the relay radio load is "50 Mbps", the number of relay radios is "1", the access radio load is "50 Mbps", and the number of access radios is "50". For weekdays (17:00 to 19:00), the relay radio load is "30 Mbps", the number of relay radios is "1", the access radio load is "30 Mbps", and the number of access radios is "20".

For weekdays (19:00 to 21:00), the relay radio load is "10 Mbps", the number of relay radios is "2", the access radio load is "5 Mbps", and the number of access radios is "5". For weekdays (21:00 to 24:00), the relay radio load is "50 Mbps", the number of relay radios is "4", the access radio load is "2 Mbps", and the number of access radios is "2".

According to the example shown in FIG. 6, while averaging is performed by dividing a "weekdays" group into time slots such as early morning "0:00 to 7:00" and morning "7: 00 to 12:00", averaging may be performed using Sunday, Saturday or other holidays as groups, or using the days of the week from Monday to Friday as separate groups. In addition, time may be split on an hour basis or a minute basis.

Next, referring to FIG. 5 which is historical traffic information, it is estimated at the wireless nodes (b) 3-2 and (c) 3-3 that at the same time in the future of FIG. 5, access radio loads and the number of access radios will be high, and throughput will be compressed when a plurality of relay radios are retained. Therefore, the centralized control node 1 instructs the wireless nodes (b) 3-2 and (c) 3-3 in advance to prioritize access radio processing by restricting the number of relay radios to "1" in order to prevent the wireless nodes from performing relay processing.

In addition, referring to FIG. 5, at the gateway wireless node 2, it is assumed that relay radio load will be high at the same time in the future of FIG. 5. Therefore, the centralized control node 1 makes the gateway wireless node 2 secure a processable relay radio load by instructing the gateway wireless node 2 in advance to increase the number of relay radios to wireless nodes (a) 3-1 and (c) 3-3, and instructs the gateway wireless node 2 in advance to prioritize relay radio processing by restricting the access radio loads and the number of access radios.

Furthermore, referring to FIG. 5, at the wireless node (a) 3-1, it is assumed that load will not be high at the same time in the future of FIG. 5. However, as described above, it is estimated that the relay radio between wireless nodes (b) 3-2 and (d) 3-4 will be stored in order to configure the network so that the wireless node (b) 3-2 does not perform relay processing. Therefore, the centralized control node 1 instructs the wireless node (a) 3-1 in advance to prioritize relay radio processing to the wireless nodes (b) 3-2 and (d) 3-4 by restricting the access radio load and the number of access radios.

Moreover, referring to FIG. 5, at the wireless nodes (d) 3-4 and (e) 3-5, it is assumed that loads will not be high at the same time in the future of FIG. 5. However, as described above, it is estimated that the relay radio load of wireless node (a) 3-1, which is the radio relay destination, will increase. Therefore, the centralized control node 1 instructs the wireless nodes (d) 3-4 and (e) 3-5 in advance to suppress relay radio load of the wireless node (a) 3-1, which is the radio relay destination, by restricting the access radio load and the number of access radios. A result of a wireless mesh network in which the above processing has been executed is shown in FIG. 7.

As seen, in the present invention, since an average value of traffic information collected in advance is calculated per specific days of the week or time slots so that a wireless mesh network which realizes optimum throughput is configured before loads on wireless nodes (a to e) 3-1 to 3-5 rise according to traffic states estimated in advance, it is possible to reduce control, which accompany changes in network configurations, over wireless nodes with high loads.

Additionally, in the present invention, since an average value of traffic information collected in advance is calculated per specific days of the week or time slots so that a wireless mesh network which realizes optimum throughput is configured before loads on wireless nodes (a to e) 3-1 to 3-5 rise according to traffic states estimated in advance, it is possible to reduce occurrences of instantaneous interruption or disconnection which accompany changes in network configurations at many user terminals A connected to wireless nodes (a to e) 3-1 to 3-5.

Furthermore, in the present invention, since an average value of radio propagation states collected in advance is calculated per specific days of the week or time slots so that a wireless mesh network which uses usable relay radio is configured before relay radio wave states between wireless nodes estimated in advance deteriorate, it is possible to reduce occurrences of instantaneous interruption or disconnection at the user terminal A as compared to a case where alternate destinations are searched and switching is performed after relay radio wave states deteriorate. While this effect is weak when using a licensed frequency band as relay radio since there is less influence due to interference from others, the effect is significant when using a frequency band which may be used without a license as relay radio since there is greater influence due to interference from others.

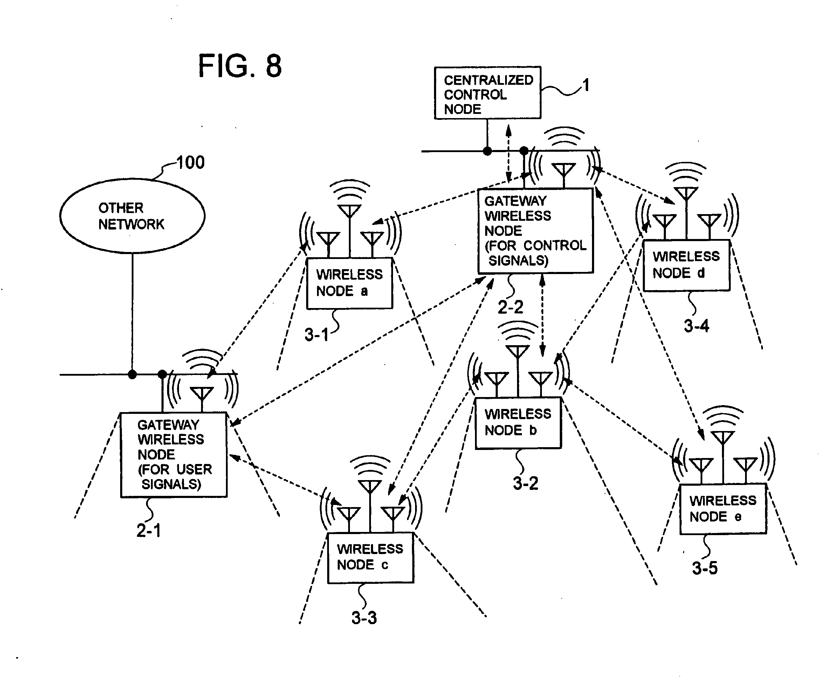

FIG. 8 is a block diagram showing a configuration of a wireless line control system according to another embodiment of the present invention. In FIG. 8, the wireless line control system according to the other embodiment of the present invention is similar in configuration to the wireless line control system according to an embodiment of the present invention shown FIG. 1, with the exception of the gateway wireless node now being separated into a control signal processing node 2-2 and a user signal processing node 2-1. As used herein, control signals indicate signals transmitted and received between the centralized control node 1 and each wireless node (a to e) 3-1 to 3-5, while user signals indicate signals such as HTTP (hypertext transfer protocol), e-mail, audio, image, moving image and the like which are transmitted and received via the user terminal A and another network 100 which includes the Internet.

The centralized control node 1 is similar in configuration to the centralized control node 1 according to an embodiment of the present invention shown in FIG. 2, and achieves similar functions as the centralized control node 1 according to an embodiment of the present invention through execution of the control program 12a by the CPU 11.

The gateway wireless node 2-2 for control signal is equipped with a function for relaying control signals transmitted and received between the centralized control node 1 and the wireless nodes (a to e) 3-1 to 3-5, but does not possess a function for relaying user signals. In addition, since the gateway wireless node 2-2 for control signal prioritizes relay radio between the wireless nodes (a to e) 3-1 to 3-5, the gateway wireless node 2-2 for control signal needs not to possess a function for processing access signals used for communication with the user terminal A.

The gateway wireless node 2-1 for user signal is equipped with nearly similar functions to the above-described gateway wireless node 2 according to an embodiment of the present invention, except that the user signal gateway wireless node 2-1 does not possess a function to relay control signals.

The wireless nodes (a to e) 3-1 to 3-5 possess similar functions to the wireless nodes (a to e) 3-1 to 3-5 according to an embodiment of the present invention described earlier, and additionally possess functions to differentiate transmitting and receiving destinations of control signals and user signals.

Relay radio for control signals, as well as relay radio and access radio for user signals may respectively use either the same or different frequency band, and may respectively use either the same or different radio system.

In the present embodiment, operations between the centralized control node 1 and the wireless nodes (a to e) 3-1 to 3-5 are nearly similar to those in the above-described embodiment of the present invention, with the exception of the reception levels and traffic information acquired by the centralized control node 1 from each wireless node (a to e) 3-1 to 3-5 now target relay radio for user signal instead of relay radio for control signal. In addition, instructions from the centralized control node 1 regarding configuration changes of the wireless mesh network are targeted at relay radios for user signal, and relay radios for control signal are not considered change targets.

As seen, in the present embodiment, relay radio between the wireless nodes are separated into those for control signals and those for user signals. Therefore, for instance, while it is necessary to extend propagation distance for relay radio for control signal, the frequency band to be used may be narrow, and a licensed band may be used. Meanwhile, for relay radio for user signal, since it is desirable to use a wide frequency band even if propagation distance is short, an unlicensed band may be used. By enhancing the degree of freedom in frequency use in this manner, frequencies limited to each carrier may now be used more effectively.

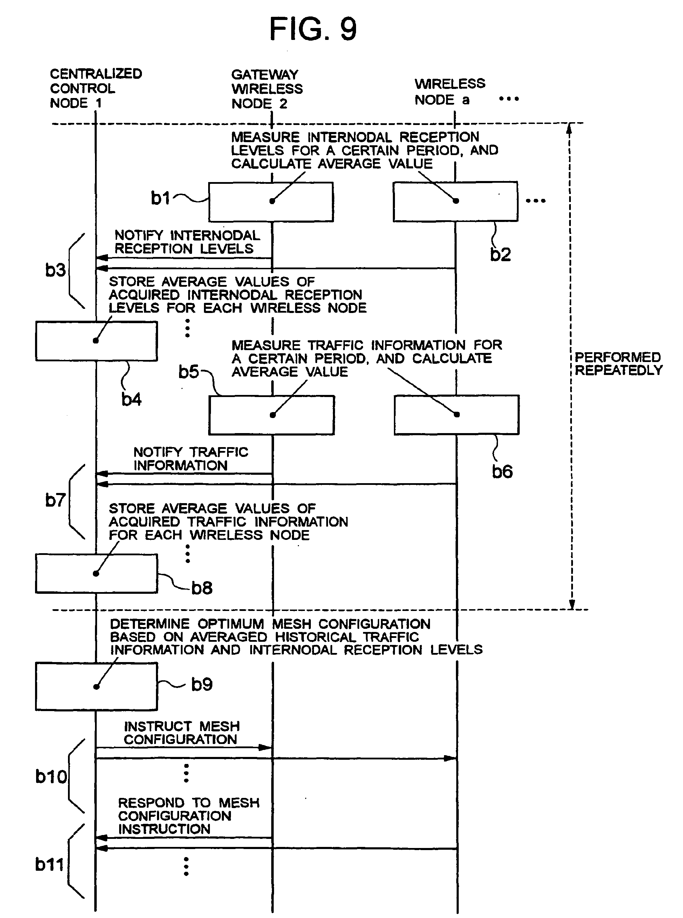

FIG. 9 is a sequence chart showing operations of the wireless line control system according to the other embodiment of the present invention. The wireless line control system according to the other embodiment of the present invention is similar in configuration to the wireless line control system according to the embodiment of the present invention shown in FIG. 1. Likewise, the centralized control node 1 is similar in configuration to the embodiment of the present invention shown in FIG. 1.

In the other embodiment of the present invention, reception levels or traffic information are respectively measured per specific periods in each wireless node (a to e) 3-1 to 3-5 and averaged, and are notified to the centralized control node 1 from each wireless node (a to e) 3-1 to 3-5. Incidentally, in FIG. 9, depiction of the operations of the wireless nodes (b to e) 3-2 to 3-5 are omitted. A description will now be provided with reference to FIGS. 1 and 9.

Each wireless node (a to e) 3-1 to 3-5 measures reception levels of relay radio between wireless nodes for each specific period and calculates average values thereof (refer to b1, b2 in FIG. 9), and notifies the average values of the reception levels between each wireless node to the centralized control node 1 (refer to b3 in FIG. 9). The centralized control node 1 stores the notified average values of reception levels according to each wireless node (a to e) 3-1 to 3-5 (refer to b4 in FIG. 9).

In addition, each wireless node (a to e) 3-1 to 3-5 measures traffic information for each specific period and calculates average values thereof (refer to b5, b6 in FIG. 9), and notifies the average values of the traffic information to the centralized control node 1 (refer to b7 in FIG. 9). The centralized control node 1 stores the notified average values of traffic information according to each wireless node (a to e) 3-1 to 3-5 (refer to b8 in FIG. 9).

The processing of b1 to b8 (calculating and storing average values of reception levels, calculating and storing average values of traffic information) is repeatedly performed.

Based on the averaged historical traffic information and reception levels between wireless nodes, the centralized control node 1 determines a configuration of a wireless mesh network which is appropriate for the present to the future (b9 in FIG. 9). In accordance with the determined wireless mesh network configuration, the centralized control node 1 transmits configuration instructions to each wireless node (a to e) 3-1 to 3-5 (refer to b10 in FIG. 9). After configuring the wireless mesh network according to configuration information instructed by the centralized control node 1, each wireless node (a to e) 3-1 to 3-5 transmits a response (refer to b11 in FIG. 9).

As seen, with the present embodiment, since messages from the centralized control node 1 for requesting reception levels or traffic information from each wireless node (a to e) 3-1 to 3-5 are no longer necessary, an advantage is gained where the control signal volume is reduced.

In the above described embodiments of the present invention, while acquisition of reception levels between wireless nodes and acquisition of traffic information are performed with separate messages, it is also possible to perform requesting/notification collectively using a single message. This will reduce the amount of messages between the centralized control node 1 and each wireless node (a to e) 3-1 to 3-5. Thus, an advantage will be gained where the overall control signal volume is reduced.

In addition, in the present invention, the means of analyzing reception levels between wireless nodes and traffic information need not be simply calculation of average values. Instead, analysis may be performed using various analysis means, such as performing averaging while exempting values significantly distant from the average value according to the variance pattern of the acquired data, or calculating mode values to be used as elements for configuring the wireless mesh network. This allows an advantage to be gained by the present invention in that appropriate analysis may be performed according to the variance pattern of the acquired data.

Furthermore, with the present invention, in the event that an increase in traffic due to an extraordinary movement of people is anticipated, such as with concerts or exhibitions and the like, it is possible to establish an appropriate wireless mesh network by manually inputting traffic information that is respectively anticipated for each wireless node (a to e) 3-1 to 3-5 to the centralized control node 1. This allows an advantage to be gained by the present invention in that a wireless mesh network may be established which also preliminarily takes into consideration irregular and extraordinary increases in traffic.

Moreover, with the present invention, when transmission output of relay radio and access radio are arranged to be variable, it is now possible to have the centralized control node 1 instruct appropriate relay radio transmission output to each wireless node (a to e) 3-1 to 3-5 by having the centralized control node 1 acquire reception levels of relay radio from each wireless node (a to e) 3-1 to 3-5 while simultaneously acquiring transmission output of relay radio, and convert the relationship between the transmission output of the transmitting-side wireless node and the reception level of the receiving-side wireless node into wireless node data and storing the same. This will prevent the wireless nodes (a to e) 3-1 to 3-5 from transmitting extraneous radio waves in the present invention. Thus, an advantage is gained where interference by other radio may be suppressed.

**Claims**

1.  A centralized control apparatus (1) for controlling each of a plurality of wireless nodes (3-1 to 3-5) of a wireless line control system being adapted for distributively arranging a plurality of wireless nodes (3-1 to 3-5) at certain intervals in a mesh pattern to configure a wireless mesh, and for transferring packet data between mutually adjacent wireless nodes, said wireless nodes (3-1 to 3-5) corresponding to access points in wireless local area network or base stations in a mobile communication system, wherein mobile units communicate with each other via said wireless nodes,
    the centralized control apparatus being **characterized by** comprising:

    first means (11, 12, 131, 14) for analyzing radio wave propagation states based on reception levels between the wireless nodes (3-1 to 3-5 and 2) and second means (11, 12, 132, 14) for analyzing traffic patterns based on traffic information of each wireless node (3-1 to 3-5 and 2) wherein said reception levels and said traffic information are collected in advance from a gateway wireless node (2) and from each of the plurality of wireless nodes, wherein the gateway wireless node is adapted to transmit to and to receive from other networks user data that is transmitted to and received from the plurality of wireless nodes (3-1 to 3-5), wherein said first analyzing means (11, 12, 131, 14) is adapted to calculate average values of reception levels collected in advance per specific days of a week or time slots, wherein said second analyzing means (11, 12, 132, 14) is adapted to calculate average values of traffic information collected in advance per specific days of the week or time slots and means (11, 12, 133, 14) for establishing a wireless mesh, based on the results of said first and second analyzing means,
    wherein the centralized control apparatus (1), when establishing the wireless mesh network, is adapted to analyze averaged historical traffic information collected from the gateway wireless node (2) and each of the plurality of wireless nodes (3-1 to 3-5) for estimating a traffic pattern from the present to the future, and is adapted to analyze averaged historical reception levels collected from the gateway wireless node (2) and each of the plurality of wireless nodes (3-1 to 3-5) for estimating a radio wave propagation state from the present to the future, and distributing the load on the entire wireless mesh network based on said estimations.

2.  The centralized control apparatus according to claim 1, which, when establishing the wireless mesh network, is adapted to repeatedly acquire the traffic information and information regarding the radio wave reception levels from the gateway wireless node and each of the plurality of wireless nodes (3-1 to 3-5).

3.  The centralized control apparatus according to claim 1, which is adapted to store each average value of traffic information and each average value of reception levels between the wireless nodes which are respectively collected at and calculated for the gateway wireless node and each of the plurality of wireless nodes.

4.  The centralized control apparatus according to claim 1, wherein the traffic information includes at least relay radio loads which indicate wireless lines which relay data between the wireless nodes, number of the relay radio lines, access radio loads which indicate wireless lines which transmit and receive data between the wireless nodes and a user terminal, and number of access radio lines.

5.  The centralized control apparatus according to claim 1, wherein a message used to instruct the wireless mesh configuration to the gateway wireless node and each of the plurality of wireless nodes comprises at least wireless nodes which are destinations of the relay radio, allowable relay radio load, and allowable access radio load.

6.  A wireless line control system comprising:

    a plurality of wireless nodes (3-1 to 3-5):
    a centralized control apparatus (1) according to any of claims 1 to 5; and
    a gateway wireless node (2) which is adapted to transmit to and receive from other networks user data that is transmitted to and received from the plurality of wireless nodes.

7.  A wireless line control method used in centralized control apparatus (1) for controlling each of a plurality of wireless nodes (3-1 to 3-5) of a wireless line control system adapted for distributively arranging a plurality of wireless nodes (3-1 to 3-5) at certain intervals in a mesh pattern to configure a wireless mesh, and for transferring packet data between mutually adjacent wireless nodes, said wireless nodes (3-1 to 3-5) corresponding to access points in wireless local area network or base stations in a mobile communication system, wherein mobile units communicate with each other via said wireless nodes, the centralized control apparatus executing:

first processing for analyzing radio wave propagation states based on reception levels between the wireless nodes (3-1 to 3-5 and 2) and second processing for analyzing traffic patterns based on traffic information of each wireless nodes (3-1 to 3-5 and 2) wherein said reception levels and said traffic information are collected in advance from a gateway wireless node (2) and from each of the plurality of wireless nodes, wherein the gateway wireless node is adapted to transmit to and to receive from other networks user data that is transmitted to and received from the plurality of wireless nodes (3-1 to 3-5), wherein said first analyzing processing calculates average values of reception levels collected in advance per specific days of a week or time slots, wherein said second analyzing processing calculates average values of traffic information collected in advance per specific days of the week or time slots, and a processing for establishing a wireless mesh, based on the results of said first and second analyzing processing, wherein the centralized control apparatus (1), when establishing the wireless mesh network, analyzes averaged historical traffic information collected from the gateway wireless node (2) and each of the plurality of wireless nodes (3-1 to 3-5) for estimating a traffic pattern from the present to the future and analyzes averaged historical reception levels collected from the gateway wireless node (2) and each of the plurality of wireless nodes (3-1 to 3-5) for estimating a radio wave propagation state from the present to the future, and distributes the load on the entire wireless mesh network based on said estimations.

8. The wireless line control method according to claim 7, wherein the centralized control apparatus, when establishing the wireless mesh network, repeatedly acquires the traffic information and information regarding the radio wave reception levels from the gateway wireless node and each of the plurality of wireless nodes to estimate traffic patterns and the radio propagation states with higher accuracy.

9. The wireless line control method according to claim 7, wherein the centralized control apparatus stores each average value of traffic information and each average value of reception levels between the wireless nodes which are respectively collected at and calculated for the gateway wireless node and each of the plurality of wireless nodes.

10. The wireless line control method according to claim 7 , wherein the traffic information includes at least relay radio loads which indicate wireless lines which relay data between the wireless nodes, number of the relay radio lines, access radio loads which indicate wireless lines which transmit and receive data between the wireless nodes and a user terminal, and number of the access radio lines.

11. The wireless line control method according to claim 7 , wherein a message used by the centralized control apparatus to instruct the wireless mesh configuration to the gateway wireless node and each of the plurality of wireless nodes comprises at least wireless nodes which are destinations of the relay radio, allowable relay radio load, and allowable access radio load.

12. A program for a wireless line control method used in a wireless line control system comprising:

a centralized control apparatus wherein the program for the wireless line control method causes a computer of the centralized control apparatus to execute the method according to any claims 7 to 11.

**Patentansprüche**

1. Zentralisiertes Steuergerät (1) zum Steuern jedes einer Anzahl von Drahtlosknoten (3-1 bis 3-5) eines Drahtlossteuersystems, das angepasst ist zum verteilten Anordnen einer Anzahl von Drahtlosknoten (3-1 bis 3-5) in bestimmten Intervallen in einem Gittermuster, um ein drahtloses Gitter zu bilden, und zum Übertragen von Paketdaten zwischen gegenseitig benachbarten Drahtlosknoten, wobei die Drahtlosknoten (3-1 bis 3-5) Zugriffspunkten in einem drahtlosen Lokalbereichnetzwerk oder Basisstationen in einem Kommunikationssystem entsprechen, wobei Mobileinheiten miteinander über die Drahtlosknoten kommunizieren, wobei das zentralisierte Steuergerät **gekennzeichnet ist durch**:

eine erste Einrichtung (11, 12, 131, 14) zum Analysieren von Funkwellenverbreitungszuständen basierend auf Empfangspegeln zwischen den Drahtlosknoten (3-1 bis 3-5 und 2) und eine zweite Einrichtung (11, 12, 132, 14) zum Analysieren von Verkehrsmustern basierend auf Verkehrsinformation jedes Drahtlosknotens (3-1 bis 3-5 und 2), wobei die Empfangspegel und die Verkehrsinformation vorab von einem drahtlosen Gatewayknoten (2) gesammelt werden und von jedem der Anzahl von Drahtlosknoten, wobei der drahtlose Gatewayknoten ausgebildet ist, aus anderen Netzwerken Benutzerdaten zu empfangen oder zu senden, die von der Anzahl von Drahtlosknoten (3-1 bis 3-5) gesendet bzw. empfangen werden, wobei die erste Analyseeinrichtung (11, 12, 131, 14) ausgebildet ist, um Mittelwerte von Empfangspegeln zu berechnen, die vorab an bestimmten Tagen einer Woche oder Zeitfenstern gesammelt werden, wobei die zweite Analyseeinrichtung (11, 12, 132, 14) ausgebildet ist, um Mittelwerte von Verkehrsinformation zu berechnen, die vorab an bestimmten Tagen der Woche oder Zeitfenstern gesammelt werden, und eine Einrichtung (11, 12, 133, 14) zum Aufbau eines Drahtlosgitters basierend auf den Ergebnissen der ersten und der zweiten Analyseeinrichtung, wobei das zentralisierte Steuergerät (1), wenn es das Drahtlosgitternetzwerk aufbaut, ausgebildet ist, um gemittelte historische Verkehrsinformation zu analysieren, die von dem drahtlosen Gatewayknoten (2) und jedem der Anzahl von Drahtlosknoten (3-1 bis 3-5) gesammelt wurden, zur Abschätzung eines Verkehrsmusters von der Gegenwart in die Zukunft, und ausgebildet ist, um gemittelte historische Empfangsdaten zu analysieren, die von dem drahtlosen Gatewayknoten (2) und jedem der Anzahl von Drahtlosknoten (3-1 bis 3-5) gesammelt wurden, zum Abschätzen eines Funkwellenverbreitungszustandes von der Gegenwart in die Zukunft und zum Verteilen der Last auf dem gesamten Drahtlosgitternetzwerk basierend auf den Abschätzungen.

2. Zentralisiertes Steuergerät nach Anspruch 1, das, beim Aufbau des Drahtlosgitternetzwerkes ausgebildet ist, um wiederholt die Verkehrsinformation und Information bezüglich der Funkwellenempfangspegel von dem drahtlosen Gatewayknoten und jedem der Anzahl von Drahtlosknoten (3-1 bis 3-5) zu erlangen.

3. Zentralisiertes Steuergerät nach Anspruch 1, das ausgebildet ist, um jeden Mittelwert von Verkehrsinformation und jeden Mittelwert der Empfangspegel zwischen den Drahtlosknoten zu speichern, die jeweils an dem drahtlosen Gatewayknoten und jedem der Anzahl von Drahtlosknoten gesammelt werden und für sie berechnet werden.

4. Zentralisiertes Steuergerät nach Anspruch 1, wobei die Verkehrsinformation zumindest Relaisfunklasten umfasst, die Drahtlosverbindungen angeben, die Daten zwischen den Drahtlosknoten übertragen, eine Anzahl von Relaisfunkleitungen, Zugriffsfunklasten, die Drahtlosleitungen anzeigen, die Daten zwischen den Drahtlosknoten und einem Benutzeranschluss senden und empfangen, und einer Anzahl von Funkzugriffsleitungen.

5. Zentralisiertes Steuergerät nach Anspruch 1, wobei eine Nachricht, die zum Angeben der Drahtlosgitterkonfiguration an den drahtlosen Gatewayknoten und jeden der Anzahl von Drahtlosknoten verwendet wird, zumindest Drahtlosknoten umfasst, die Ziele von Relaisfunk sind, eine erlaubbare Relaisfunklast und eine erlaubbare Funkzugriffslast.

6. Drahtlossteuersystem mit:

    einer Anzahl von Drahtlosknoten (3-1 bis 3-5), einem zentralisierten Steuergerät (1) gemäß einem der Ansprüche 1 bis 5 und einem drahtlosen Gatewayknoten (2), der ausgebildet ist, um an andere Netzwerkbenutzer Daten zu senden und von ihnen zu empfangen, die von der Anzahl von Drahtlosknoten gesendet und empfangen werden.

7. Drahtlossteuerverfahren zur Verwendung in einem zentralisierten Steuergerät (1) zum Steuern jeder einer Anzahl von Drahtlosknoten (3-1 bis 3-5) eines Drathlossteuersystems, das ausgebildet ist zum verteilten Anordnen einer Anzahl von Drahtlosknoten (3-1 bis 3-5) in bestimmten Intervallen in einem Gittermuster zur Bildung eines Drahtlosgitters und zum Übertragen von Paketdaten zwischen gegenseitig aneinander grenzenden Drahtlosknoten, wobei die Drahtlosknoten (3-1 bis 3-5) jeweils Zugriffspunkten in einem drahtlosen Lokalbereichsnetzwerk oder Basisstationen in einem Mobilkommunikationssystem entsprechen, wobei Mobileinheiten miteinander über die Drahtlosknoten kommunizieren, wobei das zentralisierte Steuergerät ausführt:

    eine erste Verarbeitung zum Analysieren von Funkwellenverbreitungszuständen basierend auf Empfangspegeln zwischen den Drahtlosknoten (3-1 bis 3-5 und 2) und eine zweite Verarbeitung zum Analaysieren von Verkehrsmustern basierend auf Verkehrsinformation von jedem Drahtlosknoten (3-1 bis 3-5 und 2), wobei die Empfangspegel und die Verkehrsinformation vorab von einem drahtlosen Gatewayknoten (2) und von jedem der Anzahl von Drahtlosknoten gesammelt werden, wobei der drahtlose Gatewayknoten ausgebildet ist, von anderen Netzwerken Benutzerdaten zu empfangen oder zu senden, die von der Anzahl von Drahtlosknoten (3-1 bis 3-5) gesendet und empfangen werden, wobei die erste Analyseverarbeitung Mittelwerte von Empfangspegeln analysiert, die vorab pro bestimmten Tagen einer Woche oder Zeitfenstern gesammelt werden, wobei die zweite Analyseverarbeitung Mittelwerte von Verkehrsinformation analysiert, die vorab pro bestimmten Tagen der Woche oder Zeitfenstern gesammelt werden, und eine Verarbeitung zum Aufbau eines drahtlosen Gitters basierend auf den Ergebnissen der ersten und der zweiten Analyseverarbeitung,

wobei das zentralisierte Steuergerät (1) beim Aufbau des Drathlosgitternetzwerkes gemittelte historische Verkehrsinformation analysiert, die von dem drahtlosen Gatewayknoten (2) und jedem der Anzahl von Drahtlosknoten (3-1 bis 3-5) gesammelt wurden, zum Abschätzen eines Verkehrsmusters von der Gegenwart in die Zukunft und gemittelte historische Empfangspegel analysiert, die von dem drahtlosen Gatewayknoten (2) und jedem der Anzahl von Drahtlosknoten (3-1 bis 3-5) gesammelt wurden, zum Abschätzen eines Funkwellenverbreitungszustandes von der Gegenwart in die Zukunft, und die Last auf dem gesamten drahtlosen Gitternetzwerk basierend auf den Abschätzungen verteilt.

**8.** Drahtlossteuerverfahren nach Anspruch 7, wobei das zentralisierte Steuergerät beim Erstellen des Drahtlosgitternetzwerk wiederholt die Verkehrsinformation und Information bezüglich der Funkwellenempfangspegel von dem drahtlosen Gatewayknoten und jedem der Anzahl von Drahtlosknoten ermittelt, um Verkehrsmuster und Funkverbreitungszustände mit höherer Genauigkeit abzuschätzen.

**9.** Drahtlossteuerverfahren nach Anspruch 7, wobei das zentralisierte Steuergerät jeden Mittelwert der Verkehrsinformation und jeden Mittelwert der Empfangspegel zwischen den Drahtlosknoten speichert, die jeweils von dem drahtlosen Gatewayknoten und jedem der Anzahl von Drahtlosknoten gesammelt und für sie berechnet werden.

**10.** Drahtlossteuerverfahren nach Anspruch 7, wobei die Verkehrsinformation zumindest Relaisfunklasten umfasst, die Drahtlosleitungen anzeigen, die Daten zwischen den Drahtlosknoten übertragen, einer Anzahl von Relaisfunkleitungen, Zugriffsfunklasten, die Drahtlosleitungen bezeichnen, die Daten zwischen den Drahtlosknoten und einem Benutzeranschluss empfangen und senden und einer Anzahl von Zugriffsfunkleitungen.

**11.** Drahtlossteuerverfahren nach Anspruch 7, wobei eine Nachricht, die von dem zentralisierten Steuergerät zum Anweisen der Drahtlosgitterkonfiguration an den drahtlosen Gatewayknoten und jeden der Anzahl von Drahtlosknoten verwendet wird, zumindest Drahtlosknoten aufweist, die Ziele von Relaisfunk sind, erlaubbare Relaisfunklast und eine erlaubbare Zugriffsfunklast.

**12.** Programm für ein Drahtlossteuerverfahren zur Verwendung in einem Drahtlossteuersystem mit:

einem zentralisierten Steuergerät, wobei das Programm für das Drahtlossteuerverfahren einen Computer des zentralisierten Steuergerätes dazu veranlasst, das Verfahren nach einem der Ansprüche 7 bis 11 auszuführen.

## Revendications

**1.** Appareil de commande centralisée (1) pour commander chacun d'une pluralité de noeuds sans fil (3-1 à 3-5) d'un système de commande de ligne sans fil qui est adapté pour agencer de façon distributive une pluralité de noeuds sans fil (3-1 à 3-5) à certains intervalles dans une structure maillée afin de configurer une maille sans fil, et pour transférer des données de paquet entre des noeuds sans fil mutuellement adjacents, lesdits noeuds sans fil (3-1 à 3-5) correspondant à des points d'accès dans un réseau local sans fil ou des stations de base dans un système de communication mobile, dans lequel des unités mobiles communiquent les unes avec les autres via lesdits noeuds sans fil,

l'appareil de commande centralisée étant **caractérisé en ce qu'**il comprend :

des premiers moyens (11, 12, 131, 14) pour analyser des états de propagation d'onde radio sur la base de niveaux de réception entre les noeuds sans fil (3-1 à 3-5 et 2) et des deuxièmes moyens (11, 12, 132, 14) pour analyser des structures de trafic sur la base d'informations de trafic de chaque noeud sans fil (3-1 à 3-5 et 2), dans lequel lesdits niveaux de réception et lesdites informations de trafic sont collectés à l'avance à partir d'un noeud sans fil passerelle (2) et à partir de chacun de la pluralité de noeuds sans fil, dans lequel le noeud sans fil passerelle est adapté pour transmettre à et pour recevoir d'autres réseaux des données d'utilisateur qui sont transmises à et reçues de la pluralité de noeuds sans fil (3-1 à 3-5), dans lequel lesdits premiers moyens d'analyse (11, 12, 131, 14) sont adaptés pour calculer des valeurs moyennes de niveaux de réception collectés à l'avance par jours spécifiques d'une semaine ou par créneaux temporels, dans lequel lesdits deuxièmes moyens d'analyse (11, 12, 132, 14) sont adaptés pour calculer des valeurs moyennes d'informations de trafic collectées à l'avance par jours spécifiques de la semaine ou par créneaux temporels et des moyens (11, 12, 133, 14) pour établir une maille sans fil, sur la base des résultats desdits premiers et deuxièmes moyens d'analyse,

dans lequel l'appareil de commande centralisée (1), lors de l'établissement du réseau maillé sans fil, est adapté pour analyser des informations de trafic historiques moyennées collectées à partir du noeud sans fil passerelle (2) et de chacun de la pluralité de noeuds sans fil (3-1 à 3-5) pour estimer une structure de trafic du présent au futur, et est adapté pour analyser des niveaux de réception historiques moyennés collectés à partir du noeud sans fil passerelle (2) et de chacun de la pluralité de noeuds sans fil (3-1 à 3-5) pour estimer un état de propagation d'onde radio du présent au futur, et répartir la charge sur le réseau maillé sans fil entier sur la base desdites estimations.

2. Appareil de commande centralisée selon la revendication 1, qui, lors de l'établissement du réseau maillé sans fil, est adapté pour acquérir de façon répétée les informations de trafic et des informations concernant les niveaux de réception d'onde radio à partir du noeud sans fil passerelle et de chacun de la pluralité de noeuds sans fil (3-1 à 3-5).

3. Appareil de commande centralisée selon la revendication 1, qui est adapté pour stocker chaque valeur moyenne d'informations de trafic et chaque valeur moyenne de niveaux de réception entre les noeuds sans fil qui sont collectées respectivement au niveau de et calculées pour le noeud sans fil passerelle et chacun de la pluralité de noeuds sans fil.

4. Appareil de commande centralisée selon la revendication 1, dans lequel les informations de trafic comprennent au moins des charges radio de relais qui indiquent des lignes sans fil qui relaient des données entre les noeuds sans fil, le nombre des lignes radio de relais, des charges radio d'accès qui indiquent des lignes sans fil qui transmettent et reçoivent des données entre les noeuds sans fil et un terminal d'utilisateur, et le nombre de lignes radio d'accès.

5. Appareil de commande centralisée selon la revendication 1, dans lequel un message utilisé pour instruire le noeud sans fil passerelle et chacun de la pluralité de noeuds sans fil de la configuration de maille sans fil comprend au moins des noeuds sans fil qui sont des destinations de la radio de relais, une charge radio de relais admissible, et une charge radio d'accès admissible.

6. Système de commande de ligne sans fil comprenant :

une pluralité de noeuds sans fil (3-1 à 3-5) ;
un appareil de commande centralisée (1) selon l'une quelconque des revendications 1 à 5 ; et
un noeud sans fil passerelle (2) qui est adapté pour transmettre à et recevoir d'autres réseaux des données d'utilisateur qui sont transmises à et reçues de la pluralité de noeuds sans fil.

7. Procédé de commande de ligne sans fil utilisé dans un appareil de commande centralisée (1) pour commander chacun d'une pluralité de noeuds sans fil (3-1 à 3-5) d'un système de commande de ligne sans fil adapté pour agencer de façon distributive une pluralité de noeuds sans fil (3-1 à 3-5) à certains intervalles dans une structure maillée afin de configurer une maille sans fil, et pour transférer des données de paquet entre des noeuds sans fil mutuellement adjacents, lesdits noeuds sans fil (3-1 à 3-5) correspondant à des points d'accès dans un réseau local sans fil ou des stations de base dans un système de communication mobile, dans lequel des unités mobiles communiquent les unes avec les autres via lesdits noeuds sans fil,

l'appareil de commande centralisée exécutant :

un premier traitement pour analyser des états de propagation d'onde radio sur la base de niveaux de réception entre les noeuds sans fil (3-1 à 3-5 et 2) et un deuxième traitement pour analyser des structures de trafic sur la base d'informations de trafic de chaque noeud sans fil (3-1 à 3-5 et 2), dans lequel lesdits niveaux de réception et lesdites informations de trafic sont collectés à l'avance à partir d'un noeud sans fil passerelle (2) et à partir de chacun de la pluralité de noeuds sans fil, dans lequel le noeud sans fil passerelle est adapté pour transmettre à et pour recevoir d'autres réseaux des données d'utilisateur qui sont transmises à et reçues de la pluralité de noeuds sans fil (3-1 à 3-5), dans lequel ledit premier traitement d'analyse calcule des valeurs moyennes de niveaux de réception collectés à l'avance par jours spécifiques d'une semaine ou par créneaux temporels, dans lequel ledit deuxième traitement d'analyse calcule des valeurs moyennes d'informations de trafic collectées à l'avance par jours spécifiques de la semaine ou par créneaux temporels, et un traitement pour établir une maille sans fil, sur la base des résultats desdits premier et deuxième traitements d'analyse,

dans lequel l'appareil de commande centralisée (1), lors de l'établissement du réseau maillé sans fil, analyse des informations de trafic historiques moyennées collectées à partir du noeud sans fil passerelle (2) et de chacun de la pluralité de noeuds sans fil (3-1 à 3-5) pour estimer une structure de trafic du présent au futur et analyse des niveaux de réception historiques moyennés collectés à partir du noeud sans fil passerelle (2) et de chacun de la pluralité de noeuds sans fil (3-1 à 3-5) pour estimer un état de propagation d'onde radio du présent au futur, et répartit la charge sur le réseau maillé sans fil entier sur la base desdites estimations.

8. Procédé de commande de ligne sans fil selon la revendication 7, dans lequel l'appareil de commande centralisée, lors de l'établissement du réseau maillé sans fil, acquiert de façon répétée les informations de trafic et des informations concernant les niveaux de réception d'onde radio à partir du noeud sans fil passerelle et de chacun de la pluralité de noeuds sans fil afin d'estimer des structures de trafic et les états de propagation radio avec une plus haute précision.

9. Procédé de commande de ligne sans fil selon la revendication 7, dans lequel l'appareil de commande centralisée stocke chaque valeur moyenne d'informations de trafic et chaque valeur moyenne de niveaux de réception entre les noeuds sans fil qui sont collectées respectivement au niveau de et calculées pour le noeud sans fil passerelle et chacun de la pluralité de noeuds sans fil.

10. Procédé de commande de ligne sans fil selon la revendication 7, dans lequel les informations de trafic comprennent au moins des charges radio de relais qui indiquent des lignes sans fil qui relaient des données entre les noeuds sans fil, le nombre des lignes radio de relais, des charges radio d'accès qui indiquent des lignes sans fil qui transmettent et reçoivent des données entre les noeuds sans fil et un terminal d'utilisateur, et le nombre des lignes radio d'accès.

11. Procédé de commande de ligne sans fil selon la revendication 7, dans lequel un message utilisé par l'appareil de commande centralisée pour instruire le noeud sans fil passerelle et chacun de la pluralité de noeuds sans fil de la configuration de maille sans fil comprend au moins des noeuds sans fil qui sont des destinations de la radio de relais, une charge radio de relais admissible, et une charge radio d'accès admissible.

12. Programme pour un procédé de commande de ligne sans fil utilisé dans un système de commande de ligne sans fil comprenant :

un appareil de commande centralisée dans lequel le programme pour le procédé de commande de ligne sans fil amène un ordinateur de l'appareil de commande centralisée à exécuter le procédé selon l'une quelconque des revendications 7 à 11.

FIG. 1

EP 1 783 965 B1

# FIG. 2

**CENTRALIZED CONTROL NODE** — 1

**11** CPU

**MAIN MEMORY** — **12**
CONTROL PROGRAM
**12a**

INTERNAL BUS
**110**

**STORAGE UNIT**

INTERNODAL RECEPTION LEVEL AVERAGE VALUE RETAINING AREA **131**

TRAFFIC INFORMATION AVERAGE VALUE RETAINING AREA **132**

MESH CONFIGURATION INFORMATION RETAINING AREA **133** — **13**

COMMUNICATION CONTROL SECTION
**14**

# FIG. 3

CENTRALIZED
CONTROL NODE 1

GATEWAY
WIRELESS NODE 2

WIRELESS
NODE a

WIRELESS
NODE b

a1

REQUEST INTERNODAL RECEPTION LEVELS

a2

NOTIFY INTERNODAL RECEPTION LEVELS

CALCULATE AND STORE AVERAGE VALUES OF ACQUIRED INTERNODAL RECEPTION LEVELS FOR EACH WIRELESS NODE

~ a3

a4

REQUEST TRAFFIC INFORMATION

a5

NOTIFY TRAFFIC INFORMATION

CALCULATE AND STORE AVERAGE VALUES OF ACQUIRED TRAFFIC INFORMATION FOR EACH WIRELESS NODE

~ a6

PERFORMED REPEATEDLY

DETERMINE OPTIMUM MESH CONFIGURATION BASED ON AVERAGED HISTORICAL TRAFFIC INFORMATION AND INTERNODAL RECEPTION LEVELS

~ a7

a8

INSTRUCT MESH CONFIGURATION

a9

RESPOND TO MESH CONFIGURATION INSTRUCTION

# FIG. 4

START

↓

RESPECTIVELY DEFINE TRAFFIC
INFORMATION OBTAINED FROM
THE WIRELESS NODE a AS a,
THE NUMBER OF COLLECTIONS
OF TRAFFIC AS N ( INITIAL VALUE
IS 0 ), AND AVERAGE TRAFFIC
INFORMATION PER COLLECTION
TIME AS A ( INITIAL VALUE IS 0 ).  ⟶ S1

↓

OBTAIN TRAFFIC INFORMATION
FROM WIRELESS NODE a  ⟶ S2

↓

CALCULATE AVERAGE TRAFFIC
INFORMATION USING EQUATION
$A = ( N \times A + a ) / ( N+1 )$ AND UPDATE  ⟶ S3

↓

COUNT UP NUMBER OF
COLLECTIONS OF TRAFFIC  ⟶ S4

# FIG. 5

| | RELAY RADIO LOAD | NUMBER OF RELAY RADIOS | ACCESS RADIO LOAD | NUMBER OF ACCESS RADIOS | ・・・ |
|---|---|---|---|---|---|
| GATEWAY WIRELESS NODE 2 | 54Mbps ( MAXIMUM ) | 2 | 2Mbps ( SMALL ) | 1 | |
| WIRELESS NODE a | 2Mbps ( SMALL ) | 1 | 2Mbps ( SMALL ) | 1 | |
| WIRELESS NODE b | 30Mbps ( LARGE ) | 3 | 26Mbps ( LARGE ) | 10 | |
| WIRELESS NODE c | 50Mbps ( MAXIMUM ) | 2 | 20Mbps ( LARGE ) | 8 | |
| WIRELESS NODE d | 2Mbps ( SMALL ) | 1 | 2Mbps ( SMALL ) | 1 | |
| WIRELESS NODE e | 2Mbps ( SMALL ) | 1 | 2Mbps ( SMALL ) | 1 | |

EP 1 783 965 B1

## FIG. 6

| MONITORING TARGET (WIRELESS NODE a ) | RELAY RADIO LOAD | NUMBER OF RELAY RADIOS | ACCESS RADIO LOAD | NUMBER OF ACCESS RADIOS | • • • |
|---|---|---|---|---|---|
| WEEKDAYS ( 0:00 TO 7:00 ) | 4Mbps | 3 | 2Mbps | 1 | |
| WEEKDAYS ( 7:00 TO 12:00 ) | 30Mbps | 1 | 30Mbps | 10 | |
| WEEKDAYS ( 12:00 TO 13:00 ) | 50Mbps | 2 | 4Mbps | 2 | |
| WEEKDAYS ( 13:00 TO 17:00 ) | 50Mbps | 1 | 50Mbps | 50 | |
| WEEKDAYS ( 17:00 TO 19:00 ) | 30Mbps | 1 | 30Mbps | 20 | |
| WEEKDAYS ( 19:00 TO 21:00 ) | 10Mbps | 2 | 5Mbps | 5 | |
| WEEKDAYS ( 21:00 TO 24:00 ) | 50Mbps | 4 | 2Mbps | 2 | |
| ⋮ | ⋮ | ⋮ | ⋮ | ⋮ | |

EP 1 783 965 B1

FIG. 7

EP 1 783 965 B1

# FIG. 8

CENTRALIZED CONTROL NODE — 1

OTHER NETWORK — 100

GATEWAY WIRELESS NODE (FOR CONTROL SIGNALS) 2-2

GATEWAY WIRELESS NODE (FOR USER SIGNALS) 2-1

WIRELESS NODE a 3-1

WIRELESS NODE b 3-2

WIRELESS NODE c 3-3

WIRELESS NODE d 3-4

WIRELESS NODE e 3-5

EP 1 783 965 B1

# FIG. 9

CENTRALIZED
CONTROL
NODE 1

GATEWAY
WIRELESS
NODE 2

WIRELESS
NODE a    •••

MEASURE INTERNODAL RECEPTION
LEVELS FOR A CERTAIN PERIOD, AND
CALCULATE AVERAGE VALUE

b1

•••

b2

NOTIFY INTERNODAL
RECEPTION LEVELS

b3

STORE AVERAGE VALUES OF
ACQUIRED INTERNODAL RECEPTION
LEVELS FOR EACH WIRELESS NODE

b4

MEASURE TRAFFIC INFORMATION FOR
A CERTAIN PERIOD, AND CALCULATE
AVERAGE VALUE

b5

PERFORMED
REPEATEDLY

b6

NOTIFY TRAFFIC
INFORMATION

b7

STORE AVERAGE VALUES OF
ACQUIRED TRAFFIC INFORMATION
FOR EACH WIRELESS NODE

b8

DETERMINE OPTIMUM MESH CONFIGURATION
BASED ON AVERAGED HISTORICAL TRAFFIC
INFORMATION AND INTERNODAL RECEPTION LEVELS

b9

INSTRUCT MESH
CONFIGURATION

b10

RESPOND TO MESH
CONFIGURATION
INSTRUCTION

b11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002345016 B
- WO 2004014025 A1

- WO 2005062552 A1

**Non-patent literature cited in the description**

- **SHOUYI YIN et al.** Adaptive load balancing in mobile ad hoc networks. *WIRELESS COMMUNICATIONS AND NETWORKING CONFERENCE,* 13 March 2005, vol. 4, 1982-1987